# EUROPEAN PATENT SPECIFICATION

(11) **EP 4 052 922 B1**
(45) Date of publication and mention of the grant of the patent: **03.04.2024**
(21) Application number: 22155880.2
(22) Date of filing: 09.02.2022
(51) Int. Cl.: B60B 1/08, B60B 3/00, B60B 3/06, B60B 3/10

(54) **CAST WHEEL FOR STRADDLED VEHICLE AND METHOD FOR PRODUCING THE SAME**
GEGOSSENES RAD FÜR EIN GRÄTSCHSITZFAHRZEUG UND VERFAHREN ZUR HERSTELLUNG DAVON
ROUE COULÉE POUR VÉHICULE À ENFOURCHER ET SON PROCÉDÉ DE FABRICATION

(30) Priority: 02.03.2021 JP 2021032748
(43) Date of publication of application: 07.09.2022
(73) Proprietor: Yamaha Hatsudoki Kabushiki Kaisha, Iwata-shi, Shizuoka 438-8501 (JP)
(72) Inventor: Tsukamoto, Kohei, Iwata-shi,, Shizuoka, 438-8501 (JP)
(74) Representative: Grünecker Patent- und Rechtsanwälte PartG mbB

(56) References cited:
- EP-A2- 1 222 976
- DE-A1-102012 020 398
- JP-A- 2003 306 001
- US-A- 3 484 137

## Description

The present invention relates to a method for producing a cast wheel for a straddled vehicle.

Various materials, production methods and structures have been proposed for a wheel for a straddled vehicle. The wheel, like a vehicle body, is demanded to be lightweight in order to, for example, improve the fuel efficiency.

Prior art document DE 10 2012 020 398 A1 discloses a method for producing a cast wheel for a vehicle. Said method comprises a casting step of forming, by casting, an intermediate product including a ring-shaped rim, a hub located inner to the rim and a plurality of spokes coupling the rim and the hub to each other. A ring shaped hollow body is cast in the spokes. After casting the hollow body is exposed at the spoke inter space. Said method further comprises a cutting step of performing a cutting process on the intermediate product after the casting step, wherein the intermediate product formed in the casting step further includes outer wall portions of the hollow body respectively between two spokes adjacent to each other among the plurality of spokes, and the hollow body is removed from spoke inter space by cutting.

Prior art document EP 1 222 976 A2 discloses a cast wheel for a straddled vehicle having a ring-shaped rim, a hub located inner to the rim, and a plurality of spokes coupling the rim and the hub to each other. The plurality of spokes each have a first side surface and a second side surface directed in a rim circumferential direction. Spokes have first side surface and the second side surface inclined to one side with respect to a rim width direction. Other spokes have first side surface and the second side surface inclined to the other side with respect to the rim width direction. The spokes are located alternately in the rim circumferential direction.

Patent Document 1 discloses a cast wheel for a straddled vehicle. In the cast wheel disclosed in Patent Document 1, each of spokes connecting a hub and a rim to each other includes a crotch at which one portion of the spoke closer to the hub is branched into two portions of the spoke closer to the rim. A boss to which a brake disc is to be attached is provided on the crotch. In order to decrease the weight of the cast wheel, the spoke has a recessed portion in a side surface opposite to the side surface on which the boss is provided.

Patent Document 2 discloses a method for producing a disc wheel. According to the method disclosed in Patent Document 2, a rim, a hub and a disc are first formed integrally by casting, and then a plurality of openings are punched out from the disc by pressing.
Patent Document 1: Japanese Laid-Open Patent Publication No. 2011-213237
Patent Document 2: Japanese Publication for Opposition No. Hei 6-98417

Forming a recessed portion in the spoke as in Patent Document 1 complicates the structure of the wheel. The cast wheel disclosed in Patent Document 1 still includes an unnecessary portion due to the restriction on the production method that a draft angle needs to be provided.

The production method disclosed in Patent Document 2 allows the disc wheel to be decreased in weight because the disc is thin, but cannot form three-dimensional spokes that have a suitable thickness in the vehicle width direction.

It Is an object of the present invention to provide a method for producing a cast wheel for a straddled vehicle and a cast wheel for a straddled vehicle that has a structure suppressed from being complicated and is lightweight. According to the present invention said object is solved by a method for producing a cast wheel for a straddled vehicle having the features of independent claim 1. Preferred embodiments are laid down in the dependent claims.

This specification discloses a method for producing a cast wheel for a straddled vehicle, and a cast wheel for a straddled vehicle produced by the method, both described in the following items.

### [Item 1]

A method for producing a cast wheel for a straddled vehicle, including:
a casting step of forming, by casting, an intermediate product including a ring-shaped rim, a hub located inner to the rim and a plurality of spokes coupling the rim and the hub to each other; and
a cutting step of performing a cutting process on the intermediate product after the casting step,
wherein the intermediate product formed in the casting step further includes a plurality of plate-like connection portions each connecting two spokes adjacent to each other among the plurality of spokes, characterized in that in the casting step (S1), portions of a cavity that correspond to the plate-like connection portions (140) are used as a molten metal passage, and
wherein the plurality of plate-like connection portions are removed in the cutting step.

According to the production method in a preferred embodiment, the intermediate product formed in the casting step includes the plate-like connection portions each connecting the two spokes adjacent to each other, and the plate-like connection portions are removed in the cutting step. In the casting step, portions, of a cavity, corresponding to the plate-like connection portions may be used as a molten metal passage. Therefore, restrictions imposed on the shape of the spokes by the flowability of the molten metal (the minimum thickness, the minimum cross-sectional area size and the like of the spokes) may be alleviated. Therefore, the spokes may be decreased in weight and are improved in design. Since the portions, of the cavity, corresponding to the plate-like connection portions may be used as the molten metal passage, the molten metal passage may be set regardless of the shape of the product. This may improve the flowability of the molten metal and decrease the casting faults.

In addition, the plate-like connection portions are located between the spokes. Therefore, no parting line is present on a portion, of a casting mold, corresponding to the surface of each spoke. This prevents generation of burr on the surface of the spoke, and thus makes it unnecessary to remove the burr manually. The plate-like connection portions need to be removed. However, the work of performing the cutting process by use of a lathe or the like is significantly more productive than the manual removal of the burr. Therefore, the number of the total steps of the production method may be decreased, which may improve the productivity. Since the manual removal of the burr is not needed, use of a rotary tool or a bladed tool is made unnecessary, and the work environment with dust generation may be improved. Since the manual removal of the burr is not needed, the factors that cause dispersion in the finished state of the product may be decreased.

### [Item 2]

The method of item 1,
wherein the plurality of spokes each have a first side surface and a second side surface directed in a rim circumferential direction,
wherein the plurality of spokes include:
   first spokes each having the first side surface and the second side surface inclined to one side with respect to a rim width direction, and
   second spokes each having the first side surface and the second side surface inclined to the other side with respect to the rim width direction, and
wherein the first spokes and the second spokes are located alternately in the rim circumferential direction.

Since the two side surfaces (the first side surface and the second side surface), of each spoke, directed in the rim circumferential direction are inclined to the same side with respect to the rim width direction, the thickness of the spoke may be generally constant in the rim width direction. Therefore, an unnecessary portion, which is conventionally inevitable due to the provision of the draft angle, may now be eliminated, and this may further decrease the weight of the wheel. The spokes each having a constant thickness may be formed with no use of a core. Therefore, a smaller and simpler core may be used in the casting step, which may decrease the cost. Since no core is needed to provide the spoke with a constant thickness, the production method according to a preferred embodiment is preferably usable for die-casting as well as gravity casting.

### [Item 3]

The method of item 1 or 2,
wherein the plurality of plate-like connection portions include:
   first plate-like connection portions connecting one ends, in the rim width direction, of two spokes adjacent to each other, and
   second plate-like connection portions connecting the other ends, in the rim width direction, of two spokes adjacent to each other, and
wherein the first plate-like connection portions and the second plate-like connection portions are located alternately in the rim circumferential direction.

The structure in which the first plate-like connection portions and the second plate-like connection portions are located alternately in the rim circumferential direction may be realized by protrusions of a movable mold and protrusions of a secured mold being located alternately in the rim circumferential direction. The two side surfaces (the first side surface and the second side surface), of each spoke, directed in the rim circumferential direction are provided with a draft angle of the protrusion of the movable mold and a draft angle of the protrusion of the secured mold. As a result, the first side surface and the second side surface are inclined to the same side with respect to the rim width direction. As described above, the first plate-like connection portions and the second plate-like connection portions are located alternately in the rim circumferential direction. This may preferably realize the structure in which the two side surfaces (the first side surface and the second side surface), of the spoke, directed in the rim circumferential direction are inclined to the same side with respect to the rim width direction.

### [Item 4]

The method of any one of items 1 through 3, wherein the plurality of plate-like connection portions each have an opening.

Since the plate-like connection portions each have the opening, the volume of portions to be removed in the cutting step may be decreased.

A preferred embodiment provides a method for producing a cast wheel.

### BRIEF DESCRIPTION OF THE DRAWINGS

FIG. 1 is a side view schematically showing a cast wheel (wheel) 100 for a straddled vehicle according to a preferred embodiment.
FIG. 2 is a perspective view schematically showing the wheel 100.
FIG. 3 is a schematic cross-sectional view of the wheel 100 taken along line 3A-3A' in FIG. 1.
FIG. 4 is a schematic cross-sectional view of the wheel 100 taken along line 4A-4A' in FIG. 1.
FIG. 5 is a schematic cross-sectional view of the wheel 100 taken along line 5A-5A' in FIG. 1.
FIG. 6 is a flowchart showing an example of method for producing the wheel 100.
FIG. 7 is a side view schematically showing an intermediate product (workpiece) 100' formed in a casting step S1.
FIG. 8 is a perspective view schematically showing the workpiece 100'.
FIG. 9 is a schematic cross-sectional view of the workpiece 100' taken along line 9A-9A' in FIG. 7.
FIG. 10 is a schematic cross-sectional view of the workpiece 100' taken along line 10A-10A' in FIG. 7.
FIG. 11 is a schematic cross-sectional view of the workpiece 100' taken along line 11A-11A' in FIG. 7.
FIG. 12 shows a cavity 30 usable to form a structure in which first plate-like connection portions 140A and second plate-like connection portions 140B are located alternately in a rim circumferential direction D1.
FIG. 13 is a side view showing another example of the workpiece 100'.
FIG. 14 is a perspective view showing the another example of the workpiece 100'.
FIG. 15 is a schematic cross-sectional view of a modification of the wheel 100, FIG. 15 corresponding to FIG. 5.

### DETAILED DESCRIPTION

Hereinafter, a preferred embodiment will be described with reference to the drawings.

### [Structure of the wheel]

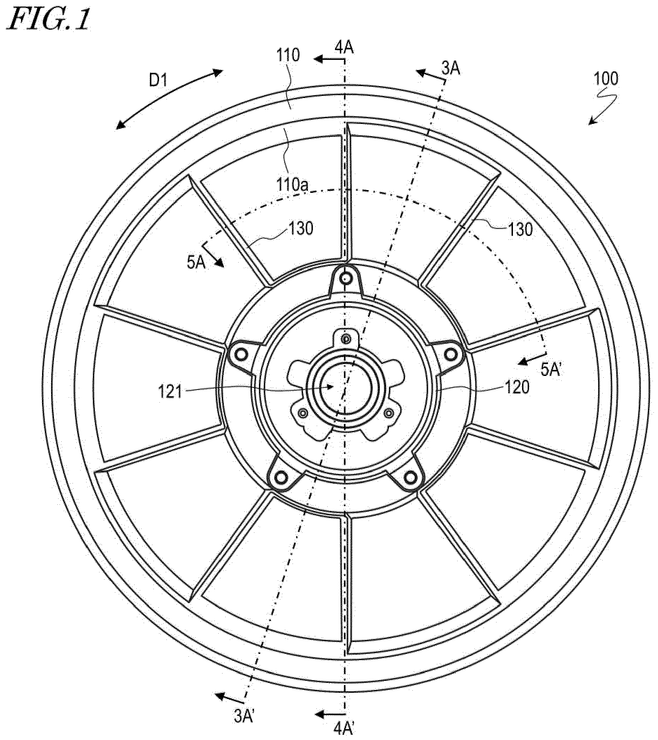

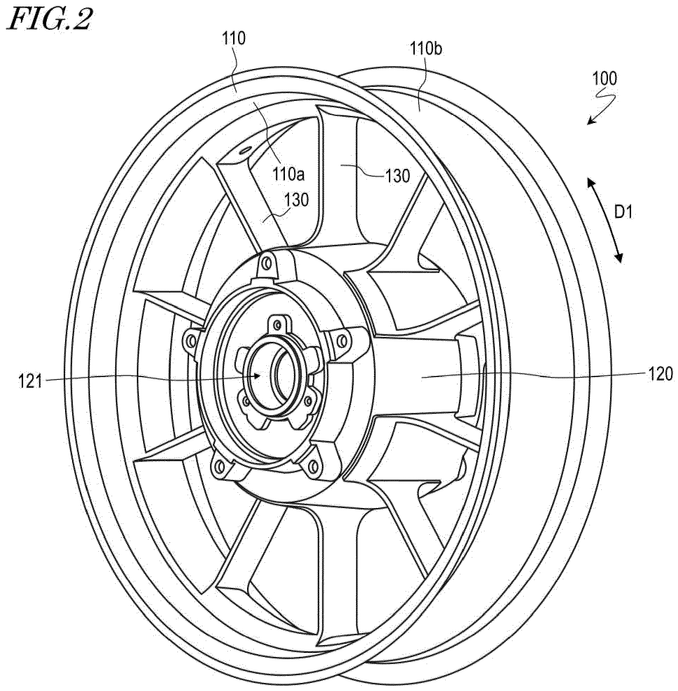

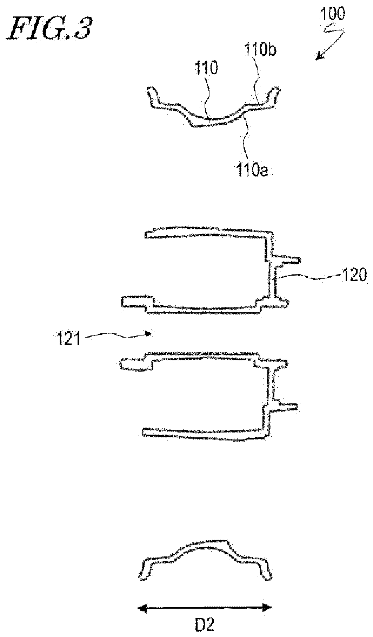

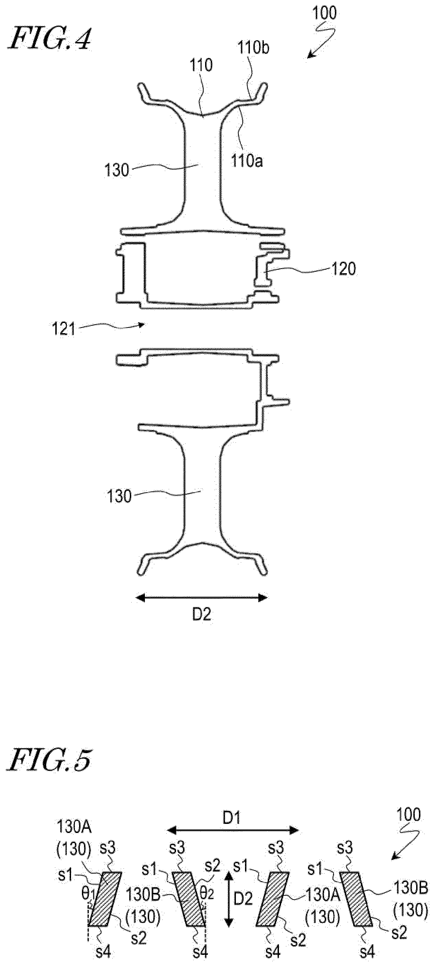

With reference to FIG. 1, FIG. 2, FIG. 3 and FIG. 4, a cast wheel (hereinafter, referred to simply as a "wheel") 100 for a straddled vehicle according to a preferred embodiment will be described. FIG. 1 and FIG. 2 are respectively a side view and a perspective view schematically showing the wheel 100. FIG. 3 and FIG. 4 are schematic cross-sectional views of the wheel 100 respectively taken along line 3A-3A' and 4A-4A' in FIG. 1.

As shown in FIG. 1, FIG. 2, FIG. 3 and FIG. 4, the wheel 100 includes a rim 110, a hub 120, and a plurality of spokes 130. The wheel 100 is formed of a metal material. The rim 110, the hub 120 and the plurality of spokes 130 are formed integrally.

The rim 110 is ring-shaped (circular-shaped). The rim 110 has an inner circumferential surface 110a and an outer circumferential surface 110b with regards to a radial direction. A tire is to be attached to the outer circumferential surface 110b of the rim 110.

The hub 120 is located at the center of the wheel 100. Namely, the hub 120 is located inner to the rim 110 with regards to a radial direction of the wheel. The hub 120 has a hole into which an axle is inserted (such a hole is an axle insertion hole 121). The hole of the hub 120 extends in an axial direction that is perpendicular to the radial direction. The hub 120 is not limited to having a specific shape shown in FIG. 1 or the like.

The plurality of spokes 130 couples the rim 110 and the hub 120 to each other. More specifically, the plurality of spokes 130 couples the inner circumferential surface 110a of the rim 110 and an outer circumferential surface of the hub 120 to each other. In the example shown here, the wheel 100 includes ten spokes 130. The number of the spokes 130 is not limited to ten.

Now, with reference also to FIG. 5, a structure of the wheel 100 will be described in more detail. FIG. 5 is a schematic cross-sectional view of the wheel 100 taken along line 5A-5A' in FIG. 1 (namely, shows a cross-section parallel to a rim circumferential direction D1). In the following description, the circumferential direction D1 of the rim 110 (hereinafter, referred to as the "rim circumferential direction D1") and a width direction D2 of the rim 110 (hereinafter, referred to as a "rim width direction D2") will be referred to. The rim circumferential direction D1 may also be considered to be a circumferential direction of the wheel 100. The rim width direction D2 is parallel to the central axis of the axle insertion hole 121. The rim width direction D2 is parallel to axial direction of the hole of the hub 120 and perpendicular to the radial direction of the wheel.

As shown in FIG. 5, the plurality of spokes 130 each have a first side surface s1 and a second side surface s2 directed in the rim circumferential direction D1, and a third side surface s3 and a fourth side surface s4 directed in the rim width direction D2. The first side surface s1 and the second side surface s2 may each be considered to be located between the third side surface s3 and the fourth side surface s4 and to connect the third side surface s3 and the fourth side surface s4 to each other. The third side surface s3 and the fourth side surface s4 may each be considered to be located between the first side surface s1 and the second side surface s2 and to connect the first side surface s1 and the second side surface s2 to each other.

The first side surface s1 and the second side surface s2 of each spoke 130 are not parallel to, but are inclined with respect to, the rim width direction D2. In FIG. 5, the inclination of the first side surface s1 and the second side surface s2 to the rim width direction D2 is exaggerated. In the example shown here, inclination angle θ₁ of the first side surface s1 to the rim width direction D2 and inclination angle θ₂ of the second side surface s2 to the rim width direction D2 are substantially equal to each other. Inclination angles θ₁ and θ₂ are each, for example, 1.5° or larger.

The plurality of spokes 130 include spokes 130A having the first side surface s1 and the second side surface s2 inclined to one side (rightward in FIG. 5) with respect to the rim width direction D2 (hereinafter, the spokes 130A will be referred to as "first spokes 130A") and spokes 130B having the first side surface s1 and the second side surface s2 inclined to the other side (leftward in FIG. 5) with respect to the rim width direction D2 (hereinafter, the spokes 130B will be referred to as "second spokes 130B"). The first spokes 130A and the second spokes 130B are located alternately in the rim circumferential direction D1.

As described above, in the wheel 100 in this embodiment, the first spokes 130A, in which the two side surfaces (the first side surface s1 and the second side surface s2) directed in the rim circumferential direction D1 are inclined to one side with respect to the rim width direction D2, and the second spokes 130B, in which the first side surface s1 and the second side surface s2 are inclined to the other side with respect to the rim width direction D2, are located alternately in the rim circumferential direction D1. Namely, in each spoke 130, the first side surface s1 and the second side surface s2 are inclined to the same side with respect to the rim width direction D2. Therefore, the spokes 130 may each have a generally constant thickness (thickness in a direction generally perpendicular to a longitudinal direction of the spokes 130 and the rim width direction D2 (thickness in the left-right direction in FIG. 5)) in the rim width direction D2. This may decrease the weight of the wheel 100.

### [Method for producing the wheel]

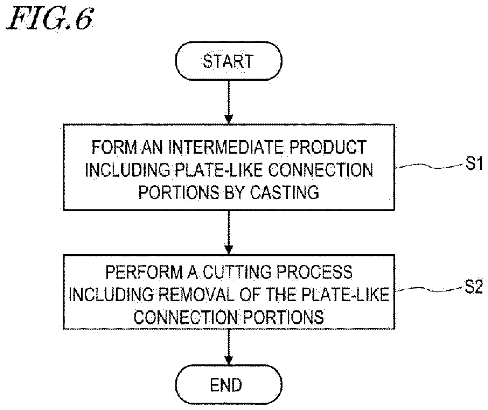

With reference to FIG. 6, a method for producing the wheel 100 will be described. FIG. 6 is a flowchart showing an example of method for producing the wheel 100.

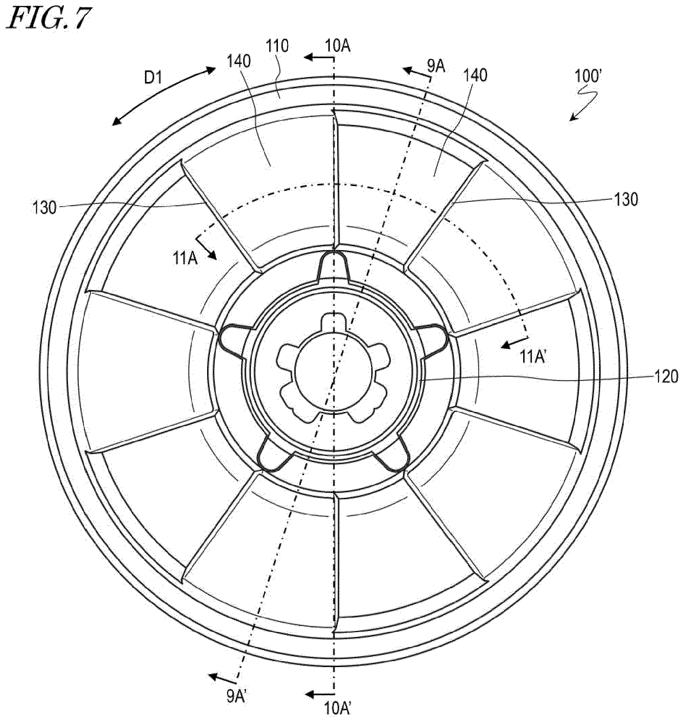

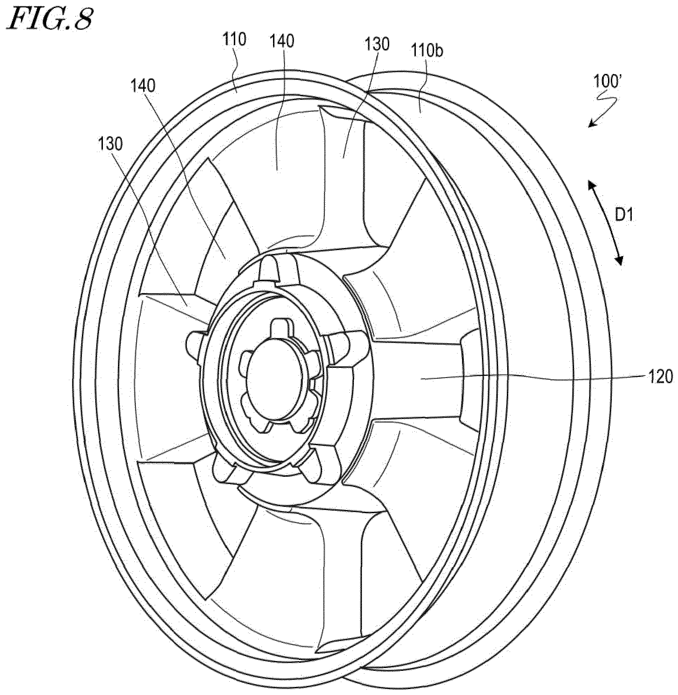

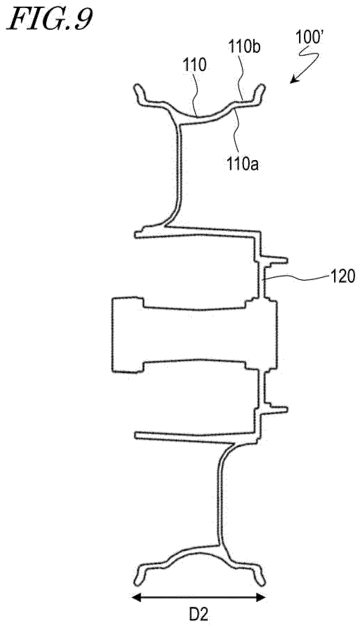

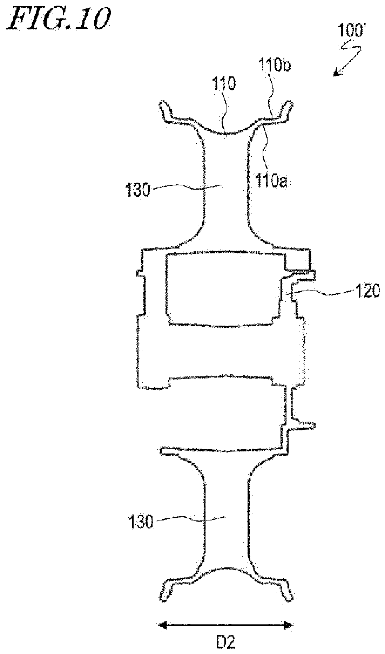

First, an intermediate product (hereinafter, referred to as a "workpiece") including the rim 110, the hub 120 and the plurality of spokes 130 is formed by casting (casting step S1). The workpiece may be formed of, for example, an aluminum alloy. The casting may be, for example, gravity casting. FIG. 7, FIG. 8, FIG. 9 and FIG. 10 show an example of the workpiece 100' formed in casting step S1. FIG. 7 and FIG. 8 are respectively a side view and a perspective view schematically showing the workpiece 100'. FIG. 9 and FIG. 10 are schematic cross-sectional views of the workpiece 100' respectively taken along line 9A-9A' and 10A-10A' in FIG. 7.

As shown in FIG. 7, FIG. 8, FIG. 9 and FIG. 10, the workpiece 100' includes the ring-shaped rim 110, the hub 120 located inner to the rim 110, and the plurality of spokes 130 coupling the rim 110 and the hub 120 to each other. The rim 110, the hub 120 and the spokes 130 in the workpiece 100' may have shapes different from those of the rim 110, the hub 120 and the spokes 130 in the wheel 100 as a final product. The shape of each of the rim 110, the hub 120 and the spokes 130 may be changed in a cutting step S2 described below.

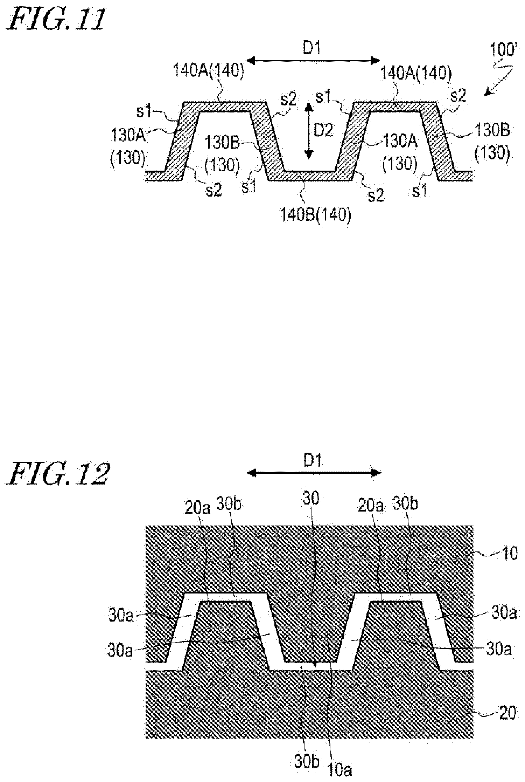

The workpiece 100' further includes a plurality of plate-like connection portions 140. The plurality of plate-like connection portions 140 each connect two spokes 130 adjacent to each other among the plurality of spokes 130. FIG. 11 shows a cross-section of the workpiece 100' parallel to the rim circumferential direction D1 (cross-section taken along line 11A-11A' in FIG. 7).

As shown in FIG. 11, the plurality of spokes 130 each have the first side surface s1 and the second side surface s2 directed in the rim circumferential direction D1. The first side surface s1 and the second side surface s2 of each spoke 130 are inclined with respect to the rim width direction D2. In FIG. 11, the inclination of the first side surface s1 and the second side surface s2 to the rim width direction D2 is exaggerated.

The plurality of spokes 130 include the first spokes 130A having the first side surface s1 and the second side surface s2 inclined to one side (rightward in FIG. 11) with respect to the rim width direction D2 and the second spokes 130B having the first side surface s1 and the second side surface s2 inclined to the other side (leftward in FIG. 11) with respect to the rim width direction D2. The first spokes 130A and the second spokes 130B are located alternately in the rim circumferential direction D1.

As shown in FIG. 11, the plurality of plate-like connection portions 140 include plate-like connection portions 140A connecting one ends, in the rim width direction D2, of the two adjacent spokes 130 (in FIG. 11, the one ends are top ends) and plate-like connection portions 140B connecting the other ends, in the rim width direction D2, of the two adjacent spokes 130 (in FIG. 11, the other ends are bottom ends). Hereinafter, the connection portions 140A will be referred to as "first plate-like connection portions 140A", and the connection portions 140B will be referred to as "second plate-like connection portions 140B". The first plate-like connection portions 140A and the second plate-like connection portions 140B are located alternately in the rim circumferential direction D1.

After the casting step S1, a cutting process is performed on the workpiece 100' (cutting step S2). In the cutting step S2, the axle insertion hole 121 and the like are formed, and the size adjustment is performed. In the cutting step S2, the plurality of plate-like connection portions 140 are removed.

After the casting step S1 but before the cutting step S2, a heat treatment step may be performed. In the case where, for example, the workpiece 100' is formed of an aluminum alloy, a solution treatment, a quenching treatment and an artificial aging treatment (such a series of treatments may occasionally be referred to as a "T6 heat treatment") may be performed in the heat treatment step.

In this manner, the wheel 100 shown in FIG. 1 and the like is obtained.

According to the production method in this embodiment, the workpiece (intermediate product) 100' formed in the casting step S1 includes the plate-like connection portions 140 each connecting the two adjacent spokes 130 to each other, and the plate-like connection portions 140 are removed in the cutting step S2. In the casting step S1, portions of a cavity that correspond to the plate-like connection portions 140 may be used as a molten metal passage. Therefore, restrictions imposed on the shape of the spokes 130 by the flowability of the molten metal (the minimum thickness, the minimum cross-sectional area size and the like of the spokes 130) may be alleviated. Therefore, the spokes 130 may be decreased in weight and are improved in design. Since the portions of the cavity that correspond to the plate-like connection portions 140 may be used as the molten metal passage, the molten metal passage may be set regardless of the shape of the product. This may improve the flowability of the molten metal and decrease the casting faults.

The plate-like connection portions 140 are located between the spokes 130. Therefore, no parting line is present on a portion, of a casting mold, corresponding to a surface of each spoke 130. This prevents generation of burr on the surface of the spoke 130, and thus makes it unnecessary to remove the burr manually. The plate-like connection portions 140 need to be removed. However, the work of performing the cutting process by use of a lathe or the like is significantly more productive than the manual removal of the burr. Therefore, the number of the total steps of the production method may be decreased, which may improve the productivity. Since the manual removal of the burr is not needed, use of a rotary tool or a bladed tool is made unnecessary, and the work environment with dust generation may be improved. Since the manual removal of the burr is not needed, the factors that cause dispersion in the finished state of the product may be decreased.

According to the production method in this embodiment, the two side surfaces (the first side surface s1 and the second side surface s2), of each spoke 130, directed in the rim circumferential direction D1 are inclined to the same side with respect to the rim width direction D2. This allows the thickness of the spoke 130 to be generally constant in the rim width direction D2. Therefore, the unnecessary portion, which is conventionally inevitable due to the provision of the draft angle, may now be eliminated, and this may further decrease the weight of the wheel 100. The spokes 130 each having a constant thickness may be formed with no use of a core. Therefore, a smaller and simpler core may be used in the casting step S1, which may decrease the cost. Since no core is needed to provide the spoke 130 with a constant thickness, the production method in this embodiment is preferably usable for die-casting as well as gravity casting.

As described above, in the workpiece 100', the first plate-like connection portions 140A connecting one ends, in the rim width direction D2, of the two adjacent spokes 130 and the second plate-like connection portions 140B connecting the other ends, in the rim width direction D2, of the two adjacent spokes 130 are located alternately in the rim circumferential direction D1. FIG. 12 shows a cavity 30 usable to form such a structure.

As shown in FIG. 12, the cavity 30 is a space defined between a first mold (movable in this example) 10 and a second mold (secured in this example) 20. The cavity 30 includes portions 30a corresponding to the spokes 130, portions 30b corresponding to the plate-like connection portions 140, a portion (not shown) corresponding to the rim 110, and a portion (not shown) corresponding to the hub 120.

The structure in which the first plate-like connection portions 140A and the second plate-like connection portions 140B are located alternately in the rim circumferential direction D1 may be realized by protrusions 10a of the movable mold 10 and protrusions 20a of the secured mold 20 being located alternately in the rim circumferential direction D1 as shown in FIG. 12. The two side surfaces (the first side surface s1 and the second side surface s2), of each spoke 130, directed in the rim circumferential direction D1 are provided with a draft angle of the protrusion 10a of the movable mold 10 and a draft angle of the protrusion 20a of the secured mold 20. As a result, the first side surface s1 and the second side surface s2 are inclined to the same side with respect to the rim width direction D2. As described above, the first plate-like connection portions 140A and the second plate-like connection portions 140B are located alternately in the rim circumferential direction D1. This may preferably realize the structure in which the two side surfaces (the first side surface s1 and the second side surface s2), of the spoke 130, directed in the rim circumferential direction D1 are inclined to the same side with respect to the rim width direction D2.

There is no specific limitation on the thickness of the plate-like connection portions 140 of the workpiece 100'. From the point of view of decreasing the volume of the portions to be removed in the cutting step S2, the thickness of the plate-like connection portions 140 is preferably as small as possible, for example, 3 mm or smaller.

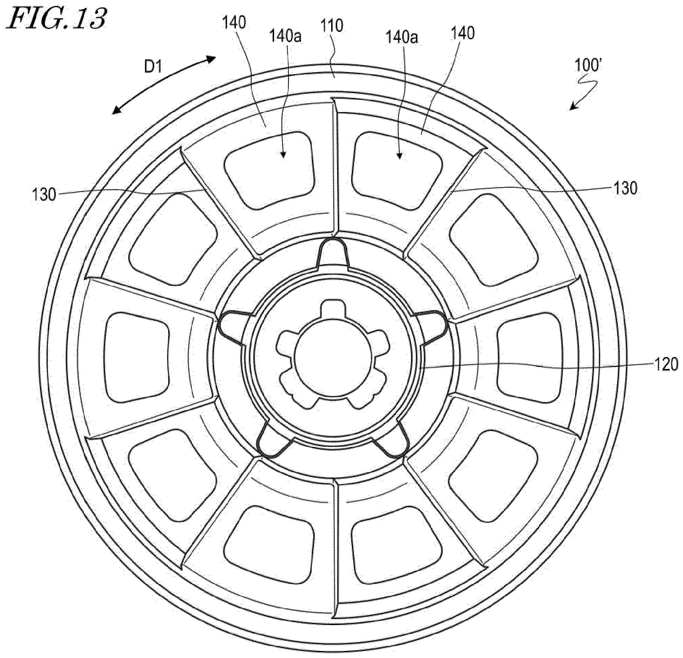

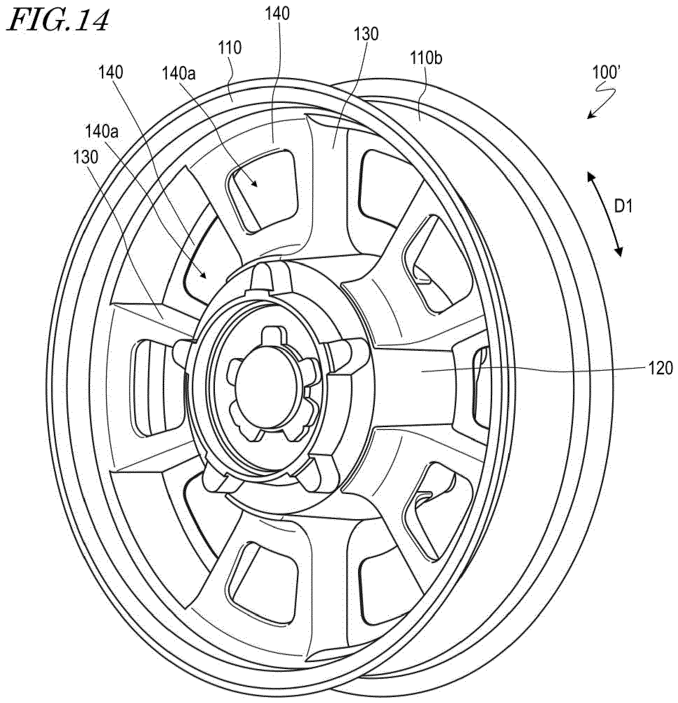

FIG. 13 and FIG. 14 show another example of the workpiece 100' formed in the casting step S1. In the example shown in FIG. 13 and FIG. 14, the plurality of plate-like connection portions 140 of the workpiece 100' each have an opening 140a. Since the plate-like connection portions 140 each have the opening 140a, the volume of the portions to be removed in the cutting step S2 may be decreased. The shape or the size of the opening 140a is not limited to that shown in FIG. 13 and FIG. 14.

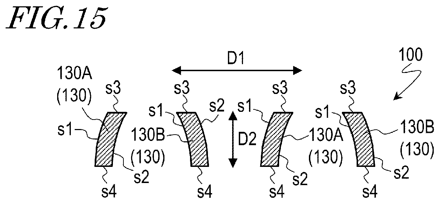

FIG. 5 shows a case where the spokes 130 have a generally parallelogram-shaped cross-section, namely, a case where the first side surface s1 and the second side surface s2 are generally planar. The first side surface s1 and the second side surface s2 are not limited to being generally planar. As shown in FIG. 15, the first side surface s1 and the second side surface s2 may be curved. Even in the case where the first side surface s1 and the second side surface s2 are curved, the spokes 130 may have a generally constant thickness in the rim width direction D2.

As described above, the method for producing the cast wheel 100 for a straddled vehicle according to a preferred embodiment includes the casting step S1 of forming, by casting, the intermediate product 100' including the ring-shaped rim 110, the hub 120 located inner to the rim 110 and the plurality of spokes 130 coupling the rim 110 and the hub 120 to each other; and the cutting step S2 of performing a cutting process on the intermediate product 100' after the casting step S1. The intermediate product 100' formed in the casting step S2 further includes the plurality of plate-like connection portions 140 each connecting two spokes 130 adjacent to each other among the plurality of spokes 130. The plurality of plate-like connection portions 140 are removed in the cutting step S2.

According to the production method in the preferred embodiment, the intermediate product 100' formed in the casting step S2 includes the plate-like connection portions 140 each connecting the two spokes 130 adjacent to each other, and the plate-like connection portions 140 are removed in the cutting step S2. In the casting step S1, portions 30b, of the cavity 30, corresponding to the plate-like connection portions 140 may be used as a molten metal passage. Therefore, the restrictions imposed on the shape of the spokes 130 by the flowability of the molten metal (the minimum thickness, the minimum cross-sectional area size and the like of the spokes 130) may be alleviated. Therefore, the spokes 130 may be decreased in weight and are improved in design. Since the portions 30b, of the cavity 30, corresponding to the plate-like connection portions 140 may be used as the molten metal passage, the molten metal passage may be set regardless of the shape of the product. This may improve the flowability of the molten metal and decrease the casting faults.

In addition, the plate-like connection portions 140 are located between the spokes 130. Therefore, no parting line is present on a portion, of the casting mold, corresponding to the surface of each spoke 130. This prevents generation of burr on the surface of the spoke 130, and thus makes it unnecessary to remove the burr manually. The plate-like connection portions 140 need to be removed. However, the work of performing the cutting process by use of a lathe or the like is significantly more productive than the manual removal of the burr. Therefore, the number of the total steps of the production method may be decreased, which may improve the productivity. Since the manual removal of the burr is not needed, use of a rotary tool or a bladed tool is made unnecessary, and the work environment with dust generation may be improved. Since the manual removal of the burr is not needed, the factors that cause dispersion in the finished state of the product may be decreased.

In an embodiment, the plurality of spokes 130 each have the first side surface s1 and the second side surface s2 directed in the rim circumferential direction D1. The plurality of spokes 130 include the first spokes 130A each having the first side surface s1 and the second side surface s2 inclined to one side with respect to the rim width direction D2, and the second spokes 130B each having the first side surface s1 and the second side surface s2 inclined to the other side with respect to the rim width direction D2. The first spokes 130A and the second spokes 130B are located alternately in the rim circumferential direction D1.

Since the two side surfaces (the first side surface s1 and the second side surface s2), of each spoke 130, directed in the rim circumferential direction D1 are inclined to the same side with respect to the rim width direction D2, the thickness of the spoke 130 may be generally constant in the rim width direction D2. Therefore, the unnecessary portion, which is conventionally inevitable due to the provision of the draft angle, may now be eliminated, and this may further decrease the weight of the wheel 100. The spokes 130 each having a constant thickness may be formed with no use of a core. Therefore, a smaller and simpler core may be used in the casting step S1, which may decrease the cost. Since no core is needed to provide the spoke 130 with a constant thickness, the production method according to a preferred embodiment is preferably usable for die-casting as well as gravity casting.

In an embodiment, the plurality of plate-like connection portions 140 include the first plate-like connection portions 140A connecting one ends, in the rim width direction D2, of two spokes 130 adjacent to each other, and the second plate-like connection portions 140B connecting the other ends, in the rim width direction D2, of two spokes 130 adjacent to each other. The first plate-like connection portions 140A and the second plate-like connection portions 140B are located alternately in the rim circumferential direction D1.

The structure in which the first plate-like connection portions 140A connecting one ends, in the rim width direction D2, of the two adjacent spokes 130 and the second plate-like connection portions 140B connecting the other ends, in the rim width direction D2, of the two adjacent spokes 130 are located alternately in the rim circumferential direction D1 may be realized by the protrusions 10a of the movable mold 10 and the protrusions 20a of the secured mold 20 being located alternately in the rim circumferential direction D1. The two side surfaces (the first side surface s1 and the second side surface s2), of each spoke 130, directed in the rim circumferential direction D1 are provided with a draft angle of the protrusion 10a of the movable mold 10 and a draft angle of the protrusion 20a of the secured mold 20. As a result, the first side surface s1 and the second side surface s2 are inclined to the same side with respect to the rim width direction D2. As described above, the first plate-like connection portions 140A and the second plate-like connection portions 140B are located alternately in the rim circumferential direction D1. This may preferably realize the structure in which the two side surfaces (the first side surface s1 and the second side surface s2), of the spoke 130, directed in the rim circumferential direction D1 are inclined to the same side with respect to the rim width direction D2.

In an embodiment, the plurality of plate-like connection portions 140 each have the opening 140a.

Since the plate-like connection portions 140 each have the opening 140a, the volume of the portions to be removed in the cutting step S2 may be decreased.

The cast wheel 100 for a straddled vehicle according to a preferred embodiment includes the ring-shaped rim 110; the hub 120 located inner to the rim 110; and the plurality of spokes 130 coupling the rim 110 and the hub 120 to each other. The plurality of spokes 130 each have the first side surface s1 and the second side surface s2 directed in the rim circumferential direction D1. The plurality of spokes 130 include the spokes 130A each having the first side surface s1 and the second side surface s2 inclined to one side with respect to the rim width direction D2, and the second spokes 130B each having the first side surface s1 and the second side surface s2 inclined to the other side with respect to the rim width direction D2. The first spokes 130A and the second spokes 130B are located alternately in the rim circumferential direction D1.

In the cast wheel 100 for a straddled vehicle according to a preferred embodiment, the first spokes 130A, in which the two side surfaces (the first side surface s1 and the second side surface s2) directed in the rim circumferential direction D1 are inclined to one side with respect to the rim width direction D2, and the second spokes 130B, in which the first side surface s1 and the second side surface s2 are inclined to the other side with respect to the rim width direction D2, are located alternately in the rim circumferential direction D1. Namely, in each spoke 130, the first side surface s1 and the second side surface s2 are inclined to the same side with respect to the rim width direction D2. Therefore, the spokes 130 may each have a generally constant thickness in the rim width direction D2, and thus the wheel 100 may be decreased in weight.

In an embodiment, the plurality of spokes 130 each have a generally constant thickness in the rim width direction D2.

The method for producing the cast wheel for a straddled vehicle according to an embodiment is preferably usable for a cast wheel for various straddled vehicles including an automatic two-wheel vehicle.

## Claims

1. A method for producing a cast wheel (100) for a straddled vehicle, comprising:
a casting step (S1) of forming, by casting, an intermediate product (100') including a ring-shaped rim (110), a hub (120) located inner to the rim (110) and a plurality of spokes (130) coupling the rim (110) and the hub (120) to each other; and
a cutting step (S2) of performing a cutting process on the intermediate product (100') after the casting step (S1),
wherein the intermediate product (100') formed in the casting step (S1) further includes a plurality of plate-like connection portions (140) each connecting two spokes (130) adjacent to each other among the plurality of spokes (130), **characterized in that** in the casting step (S1), portions of a cavity that correspond to the plate-like connection portions (140) are used as a molten metal passage, and
wherein the plurality of plate-like connection portions (140) are removed in the cutting step (S2).

2. The method of claim 1, wherein the plurality of spokes (130) each have a first side surface (s1) and a second side surface (s2) directed in a rim circumferential direction (D1), wherein the plurality of spokes (130) include:
first spokes (130A) each having the first side surface (s1) and the second side surface (s2) inclined to one side with respect to a rim width direction (D2), and
second spokes (130B) each having the first side surface (s1) and the second side surface (s2) inclined to the other side with respect to the rim width direction (D2), and
wherein the first spokes (130A) and the second spokes (130B) are located alternately in the rim circumferential direction (D1).

3. The method of claim 1 or 2, wherein the plurality of plate-like connection portions (140) include:
first plate-like connection portions (140) connecting one ends, in the rim width direction (D2), of two spokes (130) adjacent to each other, and
second plate-like connection portions (140) connecting the other ends, in the rim width direction (D2), of two spokes (130) adjacent to each other, and
wherein the first plate-like connection portions (140) and the second plate-like connection portions (140) are located alternately in the rim circumferential direction (D1).

4. The method of any one of claims 1 to 3, wherein the plurality of plate-like connection portions (140) each have an opening (140a).

## Patentansprüche

1. Ein Verfahren zur Herstellung eines gegossenen Rades (100) für ein Spreiz-Sitz-Fahrzeug, das umfasst:
einen Gieß-Schritt (S1), bei dem durch Gießen ein Zwischenprodukt (100') gebildet wird, das einen ringförmigen Kranz (110), eine Nabe (120), die innerhalb des Kranzes (110) angeordnet ist, und eine Mehrzahl von Speichen (130), die den Kranz (110) und die Nabe (120) miteinander verbinden, enthält; und
einen Schneid-Schritt (S2) zur Durchführung eines Schneidprozesses an dem Zwischenprodukt (100') nach dem Gieß-Schritt (S1),
wobei das Zwischenprodukt (100'), das in dem Gieß-Schritt (S1) gebildet ist, weiterhin eine Mehrzahl von plattenartigen Verbindungsabschnitten (140) enthält, die jeweils zwei Speichen (130), die einander benachbart sind, unter der Mehrzahl von Speichen (130) verbinden, **dadurch gekennzeichnet, dass** in dem Gieß-Schritt (S1) Abschnitte eines Hohlraums, die den plattenartigen Verbindungsabschnitten (140) entsprechen, als ein Schmelz-Metall-Durchgang verwendet werden, und
wobei die Mehrzahl der plattenförmigen Verbindungsabschnitte (140) im Schneid-Schritt (S2) entfernt wird.

2. Das Verfahren gemäß Anspruch 1, wobei die Mehrzahl von Speichen (130) jeweils eine erste Seitenfläche (s1) und eine zweite Seitenfläche (s2) haben, die in eine Kranzumfangsrichtung (D1) gerichtet sind, wobei die Mehrzahl von Speichen (130) enthält:
erste Speichen (130A), die jeweils die erste Seitenfläche (s1) und die zweite Seitenfläche (s2) aufweisen, die zu einer Seite in Bezug auf eine Kranzbreitenrichtung (D2) geneigt sind, und
zweite Speichen (130B), die jeweils die erste Seitenfläche (s1) und die zweite Seitenfläche (s2) aufweisen, die zur anderen Seite in Bezug auf die Kranzbreitenrichtung (D2) geneigt sind, und
wobei die ersten Speichen (130A) und die zweiten Speichen (130B) abwechselnd in der Kranzumfangsrichtung (D1) angeordnet sind.

3. Das Verfahren gemäß Anspruch 1 oder 2, wobei die Mehrzahl von plattenartigen Verbindungsabschnitte (140) enthält:
erste plattenartige Verbindungsabschnitte (140), die in der Kranzbreitenrichtung (D2) die einen Enden zweier nebeneinander liegender Speichen (130) verbinden, und
zweite plattenförmige Verbindungsabschnitte (140), welche die anderen Enden von zwei in der Kranzbreitenrichtung (D2) benachbarten Speichen (130) verbinden, und
wobei die ersten plattenartigen Verbindungsabschnitte (140) und die zweiten plattenartigen Verbindungsabschnitte (140) abwechselnd in der Kranzumfangsrichtung (D1) angeordnet sind.

4. Das Verfahren gemäß irgendeinem der Ansprüche 1 bis 3, wobei die Mehrzahl von plattenartigen Verbindungsabschnitten (140) jeweils eine Öffnung (140a) haben.

## Revendications

1. Procédé de production d'une roue coulée (100) pour un véhicule à enfourcher, comprenant :
une étape de coulée (S1) consistant à former par coulée un produit intermédiaire (100') comprenant une jante annulaire (110), un moyeu (120) situé à l'intérieur de la jante (110), et une pluralité de rayons (130) qui couplent entre eux la jante (110) et le moyeu (120) ; et
une étape de découpe (S2) consistant à mettre en œuvre un processus de découpe sur le produit intermédiaire (100') après l'étape de coulée (S1),
dans lequel le produit intermédiaire (100') formé lors de l'étape de coulée (S1) comprend en outre une pluralité de portions de connexion en forme de plaque (140) connectant chacune deux rayons (130) adjacents parmi la pluralité de rayons (130),
**caractérisé en ce que**, lors de l'étape de coulée (S1), des portions d'une cavité qui correspondent aux portions de connexion en forme de plaque (140) sont utilisées comme passages de métal fondu, et
dans lequel les portions de la pluralité de portions de connexion en forme de plaque (140) sont retirées lors de l'étape de découpe (S2).

2. Procédé selon la revendication 1, dans lequel les rayons de la pluralité de rayons (130) ont chacun une première surface latérale (s1) et une deuxième surface latérale (s2) dirigées en direction circonférentielle de la jante (D1), dans lequel la pluralité de rayons (130) comprend :
des premiers rayons (130A) ayant chacun la première surface latérale (s1) et la deuxième surface latérale (s2) inclinées d'un côté par rapport à la direction de la largeur de la jante (D2), et
des deuxièmes rayons (130B) ayant chacun la première surface latérale (s1) et la deuxième surface latérale (s2) inclinées vers l'autre côté par rapport à la direction de la largeur de la jante (D2), et
dans lequel les premiers rayons (130A) et les deuxièmes rayons (130B) sont situés alternativement en direction circonférentielle de la jante (D1).

3. Procédé selon la revendication 1 ou 2, dans lequel la pluralité de portions de connexion en forme de plaque (140) comprend :
des premières portions de connexion en forme de plaque (140) qui connectent les extrémités, dans la direction de la largeur de la jante (D2), de deux rayons (130) adjacents, et
des deuxièmes portions de connexion en forme de plaque (140) qui connectent les autres extrémités, dans la direction de la largeur de la jante (D2), de deux rayons (130) adjacents, et
dans lequel les premières portions de connexion en forme de plaque (140) et les deuxièmes portions de connexion en forme de plaque (140) sont situées alternativement dans la direction circonférentielle de la jante (D1).

4. Procédé selon l'une quelconque des revendications 1 à 3, dans lequel les portions de la pluralité de portions de connexion en forme de plaque (140) comportent chacune une ouverture (140a).
